# EUROPEAN PATENT APPLICATION

(11) **EP 2 487 338 A1**
(43) Date of publication of application: **15.08.2012**
(21) Application number: 11154221.3
(22) Date of filing: 11.02.2011
(51) Int. Cl.: F01K 3/00, F03G 6/06

(54) **Solar thermal power plant**

(71) Applicant: Alstom Technology Ltd, 5400 Baden (CH)
(72) Inventor: Hiegemann, Michael, 5235 Rüfenach (CH); Di Dionisio, Laurent, 5408 Ennetbaden (CH)

(57) **Abstract**

A solar thermal power plant comprises a primary cycle (11) and a secondary cycle (12), where the secondary cycle (12) is the water-steam cycle of a steam turbine driving a generator (G). The primary cycle includes a solar field (14) to heat a thermal fluid that is used to generate steam in a heat exchange system (13). The secondary cycle (12) comprises at least one solar field (15) enabling a further heating of the steam by means of direct solar heating prior to the inlet to a steam turbine (ST). The combination of direct and indirect solar heating for generating steam enables the generation of steam of higher temperatures while maintaining a low level of thermal stress in absorber tubes of the solar fields.

## Description

### Technical Field

The present invention pertains to a solar thermal power plant for the generation of electrical energy having a primary cycle and a secondary cycle, where the primary cycle contains a thermal fluid, which is heated by solar radiation and the secondary cycle contains a working fluid that is evaporated to gaseous state for expansion in a turbine. The invention furthermore pertains to a method of operating a solar thermal power plant.

### Background Art

In the effort to reduce the emission of CO2 to the atmosphere in the generation of the electrical energy, solar thermal power plants are considered a promising alternative to fossil fuel fired thermal power plants.
In the prior art generally two types of solar thermal power plants are known, one operating with direct evaporation of water using solar heat, the other operating with indirect evaporation of water by means of a thermal fluid heated by solar heat.
In the first type of solar thermal power plant solar radiation is used directly to heat water to generate steam to be used to drive a turbine. Such plants have therefore only a single thermodynamic cycle. Such plants with direct evaporation of water typically have a solar field of mirrors, which focus the sun light onto central solar receiver or solar tower. This can generate high maximum steam temperatures up to1000°C, where this steam is used directly in a steam turbine.
While such systems are able to generate steam of very high temperatures, they are, however, subjected to large temperature gradients in some components as the solar receiver, which, among others, limit the lifetime of these components.
In order to mitigate such thermal gradient problems, EP2000669 proposes a solar power plant using a central tower solar receiver connected to a water evaporation subsystem and a steam superheating subsystem, which are separated by a drum. One part of the solar field is used for one subsystem, where another part of the solar field is used for the other. Temperatures of about 550°C can be reached. The plant allows greater control in regard to transient conditions of pressure and temperature.

In the second type of solar thermal power plant solar radiation in a primary cycle, where it is used to heat a thermal fluid, such as an oil, which in turn is used to heat water in a secondary cycle by means of a heat exchanger to generate steam for a steam turbine. This configuration uses a solar field of parabolic troughs and absorber tubes as solar heating arrangement, which enables the heating of the thermal fluid up to a maximum temperature of about 400°C.

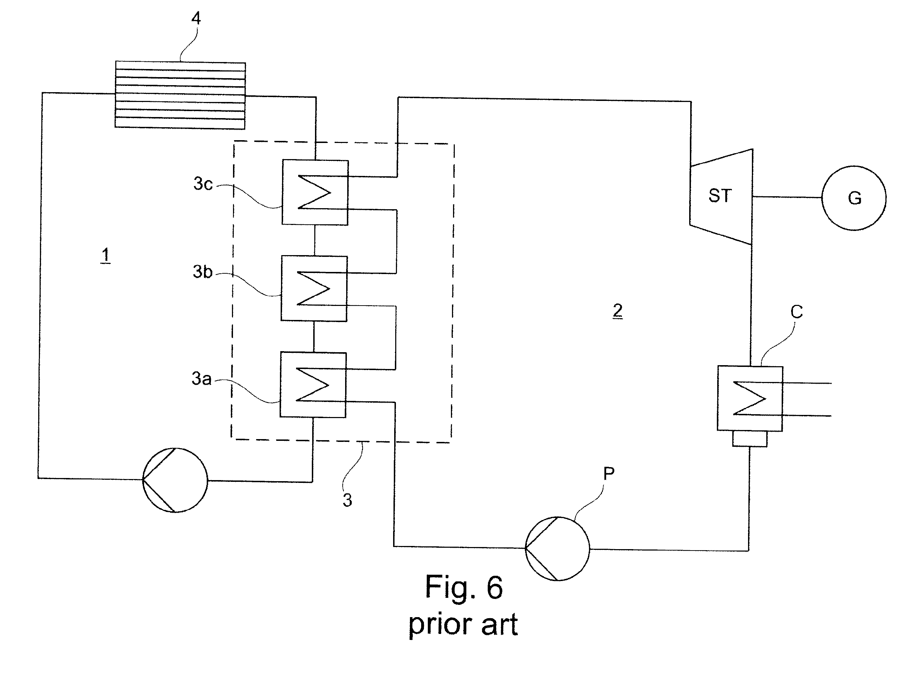

Figure 6 shows an example of a solar power plant based on a primary solar cycle 1 with a solar field of parabolic troughs 4, through which passes a thermal fluid. The heated thermal fluid is directed through a system of heat exchangers 3a-c, wherein water is preheated to saturation temperature in exchanger 3a, evaporated in exchanger 3b, and superheated in exchanger 3c. The generated steam is directed to a steam turbine ST, which drives a generator G. The heat exchangers 3a-c and the water-steam cycle comprising the condenser C, feedwater pump P and the steam turbine form the secondary cycle 2 of the plant.
This structure of this power plant sets limits to the steam temperatures that can be reached in the secondary cycle 2 because the thermal fluid in the primary cycle 1, typically a heat transfer oil, should not be heated to a temperature above 400 to 430°C else the liquid may loose its properties or even coke. Typical maximum steam temperatures that can be reached in the secondary cycle are about 375°C, which effectively limits the power that can be generated with a plant of this kind.

For example, WO2010054911 discloses a solar power plant based on a primary cycle containing heat transfer fluid and a secondary cycle containing a working fluid, usually steam, for expansion in with steam turbines, where the heat transfer fluid is heated by solar radiation and provides the heat to the secondary cycle in a steam generator for a first turbine and to two reheaters to reheat the steam for the second and the third turbine. The maximum steam temperatures are below 400°C.

Various power plant concepts have been proposed in order to increase the maximum steam temperature and the performance of such power plants. For example, WO2008/113482 discloses a solar power plant having a single cycle, which circulates the water directly through a solar field and generates steam by direct solar heating and evaporation for a first steam turbine. In addition, the steam exhausted by the first steam turbine is reheated by means of a heat exchanger heated by supplementary fossil firing and directed to a second steam turbine.

DE10128562 discloses a further solar thermal power plant using several solar fields for the generation of steam by direct solar radiation only, where the steam is used to drive a high-pressure and low-pressure steam turbine. The plant comprises a separator or a steam drum allowing separation of the liquid and vapor phase generated by a first series of solar fields. The drum is connected in particular with a further series of solar fields to superheat the steam for the turbine as well as with recirculation pipework mixing the liquid from the drum with the water from the feedwater preheating system. Live steam is used to reheat steam for the low-pressure steam turbine, and bleed steam from the turbines is used for preheating feedwater in a preheating line.
M. Eck and W.-D. Steinmann disclose in the Proceedings of Solar Forum 2001: Solar Energy: The Power to Choose, April 21-25, 2001, Washington, D.C., USA, contain the article "Direct Steam Generation in Parabolic Troughs: First Results of the DISS Project" , 2001 ASME, several concepts for direct solar steam generation for steam turbines of an solar thermal power plant. They include a once-through concept, a recirculation concept, and an injection concept. The study reveals that the once-through concept bears potential risks in regard to temperature gradients in the absorber tubes and subsequent material failures, the recirculation concept is shown to require high recirculation rates in order to guarantee sufficient cooling of the tubes for safe operation and therefore a high power consumption of the auxiliary recirculation pump. The injection concept may allow safer operation, however at lower thermal exchange efficiency within the absorber tubes due to a decreased average working medium temperature.

### Summary of Invention

In view of the described background art it is an object of the invention to provide a solar thermal power plant for the generation of electrical energy that may overcome the drawbacks of the power plants and concepts presented in the prior art. It is a particular object of the invention to present a solar thermal power plant that allows an operation at reduced risk in terms of thermal gradients in the components of the solar absorber together with a higher performance and efficiency level compared to plants of the prior art. It is furthermore an object of the invention to provide a method to operate a solar thermal power plant that is improved over those of the prior art.

A solar thermal power plant having at least one steam turbine for the generation of electrical energy comprises a primary cycle providing heat and a secondary cycle, which forms a water-steam cycle of the plant. The primary cycle is arranged to circulate a first thermal fluid and comprises a solar field configured and arranged to heat the thermal fluid. The secondary cycle is configured and arranged to circulate water and generate steam to drive the steam turbine. The primary and secondary cycles are operatively connected by means of a heat exchange system having at least one heat exchanger arranged to exchange heat of the thermal fluid of the primary cycle with water of the secondary cycle, thereby generating steam. According to the invention, the solar thermal power plant comprises at least one additional solar field arranged in the secondary cycle.

While the heat exchange system connecting the primary and secondary cycles is configured to generate steam by evaporation by means of the heat from the thermal fluid of the primary cycle, the solar field in the secondary cycle enables to superheat or reheat that steam prior to its entry to a steam turbine.

The solar fields in the primary and secondary cycles comprise, for example, a plurality of parabolic troughs with absorber tubes arranged to direct a thermal fluid or water or steam through them and to absorb the solar radiation focused onto its surface by the reflecting surface of the trough.
Instead of parabolic troughs, other focusing elements may be used to direct the solar radiation onto the tubes.

The invention encompasses the combination of a primary cycle configured for indirect solar heating of water by means of a thermal fluid with a secondary cycle configured for direct solar heating of steam. The combination enables a solar thermal power plant that maintains the operation safety innate to the indirect solar heating using a thermal fluid in the primary cycle and simultaneously allows higher steam temperatures achieved by means of the direct solar heating of the steam in the secondary cycle. The thus generated high temperature steam may be directly used as live steam or reheat steam in a steam turbine. The power plant allows a first solar heating to be performed in the primary cycle using a thermal fluid that does not undergo a phase change, where a sustainable low thermal stress on the absorber tubes is maintained. Steam is generated in the heat exchanger system thermally connecting the primary and the secondary cycle and is then superheated in the secondary cycle by means of direct solar heating. The additional solar field in the secondary cycle can heat the steam to temperatures well above 400°C otherwise achievable by indirect heating cycles. Specifically, steam temperatures up to 550°C can be reached at the inlet of a steam turbine thereby allowing a higher energy state of the steam and a higher performance and efficiency level of the turbine.

In a first embodiment of the invention, the solar thermal power plant comprises, in addition to the solar field in the primary cycle, a solar field arranged in the secondary cycle or water-steam cycle of the steam turbine. Specifically, the solar field in the secondary cycle is arranged after the heat exchange system for the generation of steam and prior to the steam turbine in the direction of flow of the steam and enabling a final direct solar superheating prior to the steam turbine inlet.

In a second embodiment of the invention, the solar thermal power plant comprises, in addition to the solar field in the primary cycle, two further solar fields arranged in the secondary cycle. Specifically, one solar field is arranged after the heat exchange system for steam generation and a further solar field is arranged after the feedwater pump or after a bleed steam heated feedwater preheating train of the water steam cycle and prior to the heat exchange system connecting the primary and secondary cycles for steam generation.

In a third embodiment of the invention, in addition to the solar field in the primary cycle, a further solar field is arranged in the secondary cycle of the solar thermal power plant, specifically after a first, high-pressure steam turbine and prior to a second, low-pressure steam turbine. This arrangement allows a reheat of the steam by direct solar heating prior to the inlet to the final steam turbine.

In a fourth embodiment of the invention, in addition to the solar field in the primary cycle, the power plant comprises two further solar fields arranged in the secondary cycle, where one is arranged prior to a high-pressure steam turbine and another solar field is arranged prior to a low-pressure steam turbine. This arrangement allows a superheat of the steam by direct solar heating prior to the inlet of the first steam turbine and a reheat of the steam by direct solar heating prior to the inlet to the final steam turbine.
In a fifth embodiment of the invention, in addition to the solar field in the primary cycle, the power plant comprises three further solar fields arranged in the secondary cycle, where one is arranged prior to a high-pressure steam turbine, another is arranged prior to a low-pressure steam turbine. The third solar field is arranged prior to a first heat exchanger within the heat exchange system for steam generation.

The combination of both indirect solar heating and direct solar heating in the same solar thermal power plant allows a number of different embodiments, where each allows for greater operation safety and control possibilities in terms of handling the thermal gradients otherwise found in power plants with direct solar heating alone.

The solar thermal power plant according to the invention comprises a heat exchange system with one or more heat exchangers configured for the steam generation. The size and the number of heat exchangers may depend on the sizing of the plant and the number and size of the additional solar fields arranged in the plant. In all embodiments, the heat exchange system comprises at least an evaporator effecting a phase change of the fluid in the secondary cycle. In a further embodiment of the invention, the solar thermal power plant may comprise a thermal heat storage device to store heat generated by direct or indirect solar heating and configured and arranged to deliver heat to or to receive heat from the fluid of the secondary cycle. A heat storage device may likewise be arranged in the primary cycle. Steam lines branching off the heat transfer fluid line of the primary cycle or the steam line of the secondary cycle may be arranged to lead the heat transfer fluid or the steam to the heat storage device. They can, for example, branch off the heat transfer fluid line after the solar field in the primary cycle or the steam line after the heat exchange system or after a solar field in the secondary cycle.
In a further embodiment of the invention, the solar thermal power plant comprises injection lines leading to the steam line of the secondary cycle. Such injection lines direct liquid water from a source in the secondary cycle into the steam flow in the secondary cycle, where said source is at a lower temperature than the steam flow. Such injection point can be placed prior to a solar field or after a solar field or at both such locations. In addition or alternatively, a solar field of any of the embodiments disclosed can be also be arranged as two (partial) solar fields arranged in series, where an injection point is arranged between the two (partial) solar fields. The water injection lines into the steam flow enables a control of temperature within a short time.

According to the invention, a method of operating a solar thermal solar power plant having a primary cycle and a secondary cycle comprises heating a thermal fluid in the primary cycle by means of solar radiation collected in a solar field and transferring the heat of this thermal fluid by means of heat exchange to water in order to evaporate it and generate steam. The method further comprises heating the steam generated by the heat exchange in the secondary cycle to higher temperatures by means solar heat collected in a solar field arranged in the secondary cycle and directing the higher temperature steam to a steam turbine.

Various embodiments of the method comprise heating steam in the secondary cycle at different positions within the secondary cycle or water steam cycle and steam turbine system of the power plant. This includes superheating or reheating steam after the heat exchange system and prior to a turbine or between two turbines of a turbine system.
A further embodiment of the method comprises preheating the feedwater circulating in the water-steam cycle or secondary cycle of the power plant prior to its evaporation by means of heat exchange with the thermal fluid heated in the solar field of the primary cycle.

The additional solar heating of the steam within the secondary cycle enables to perform the superheating or reheating of the steam by means of solar heating instead of by heat transfer from the thermal fluid of the primary cycle. This allows the generation of steam of higher temperatures to drive the steam turbines and thereby at higher power plant performance.

### Brief Description of the Drawings

Figure 1 shows a first embodiment of the solar thermal power plant according to the invention.
Figure 2 shows a second embodiment of the solar thermal power plant according to the invention.
Figure 3 shows a third embodiment of the solar thermal power plant according to the invention.
Figure 4 shows a fourth embodiment of the solar thermal power plant according to the invention.
Figure 5 shows a fifth embodiment of the solar thermal power plant according to the invention.
Figure 6 shows a solar thermal power plant according to the prior art.

### Best Modes for Carrying out the Invention

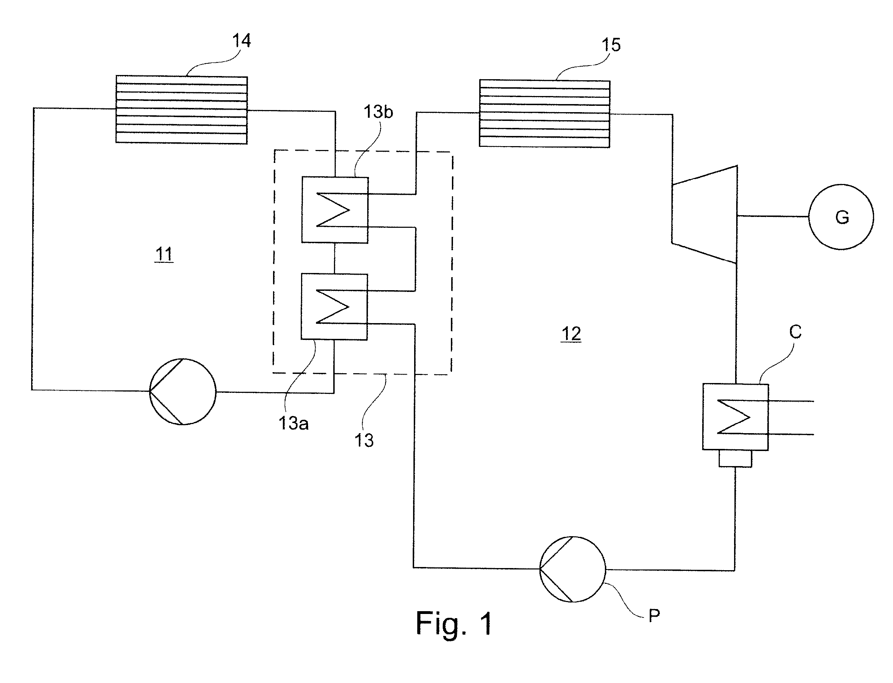

Each of the embodiments of the invention shown in figures 1-5 comprise a primary cycle and a secondary cycle, where a thermal fluid is heated in a solar field arranged in the primary cycle to provide heat to a heat exchange system that generates steam to be circulated in the secondary cycle. The heat exchange system transfers heat to water in order to effect a phase change of the water. The solar fields, in the primary cycle and in the secondary cycle are used for heating a fluid while maintaining its phase. The thermal fluid in the primary cycle remains in the same fluid phase without evaporating and coking. In the secondary cycle, the fluid that is heated is either in liquid or vapor phase when it passes through the tubes of a solar field, where its phase remains the same. Thereby the thermal stress on the tubing in the solar fields remains sustainable and low-risk operation is ensured.

Figure 1 schematically shows the layout of a solar thermal power plant having a primary cycle 11 and a secondary cycle 12, which is also the water-steam cycle of the power plant. The primary and secondary cycles 11 and 12 are operatively connected with one another by a heat exchange system 13 comprising heat exchangers 13a and 13b. The feedwater is heated to almost saturation temperature in heat exchanger or preheater 13a, and the water is evaporated in evaporator 13b by means of the heat transferred from the thermal fluid circulating in the primary cycle 11. The thermal fluid in the primary cycle can be any known or suitable thermal fluid for heating by solar heat by circulation through a solar field 14. The solar field can, for example, have absorber tubes arranged in an array of parabolic troughs or other elements for collecting solar radiation. The steam generated in the heat exchanger or evaporator 13b is directed to a further solar field 15 arranged in the secondary cycle of the plant, which can be of same type as the solar field 14, or of another type, able to heat the steam circulating through piping to temperatures of up to 550°C at high pressures. The steam thus generated is directed to the steam turbine for expansion and to drive the generator G. The expanded steam is condensed in condenser C and recirculated via pump P to heat exchanger 13a for preheating, thus completing the water-steam cycle. In this embodiment of the power plant according to the invention, the superheating of the steam is performed entirely by the solar field 15 in the secondary cycle, where the heat exchange system 13 performs preheating and evaporation only. In a variant of this embodiment, the heat exchange system includes an additional heat exchanger to perform a first stage of the superheating, where the solar field 15 performs a second stage superheating.

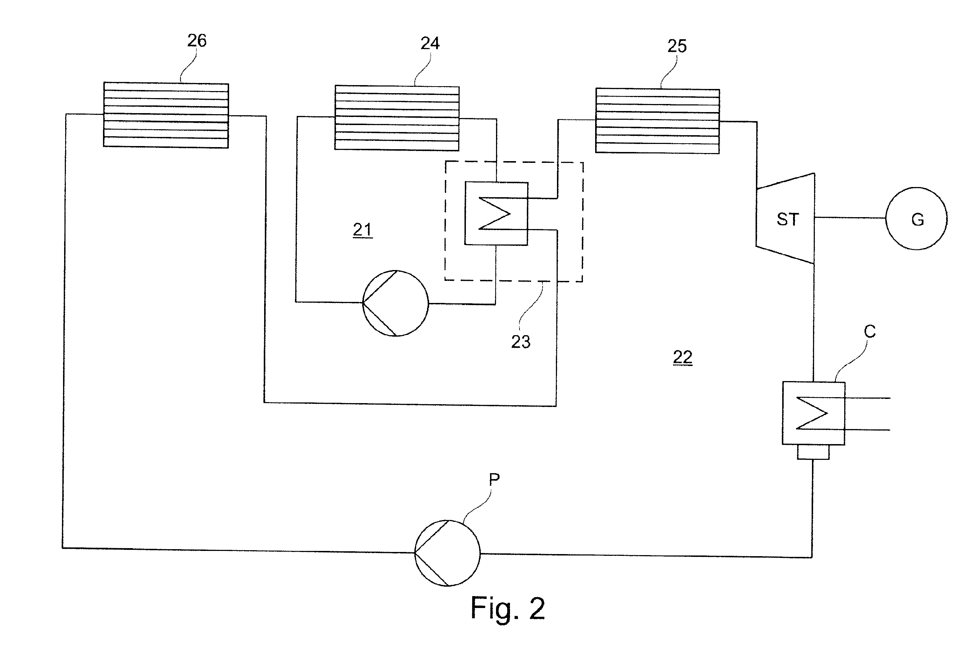

Figure 2 shows a solar thermal power plant that is an extension of the plant of figure 1. Its basic structure is the same in that it comprises a secondary water steam cycle 22 with steam turbine ST, condenser C and heat exchange system 23. The primary cycle 21 provides the heat exchange system 23 with a thermal fluid heated in solar field 24. The feedwater circulating in the secondary cycle 22 is first preheated in a solar field 26 without phase change and then directed to the evaporator within the heat exchange system 23, where steam is generated using the heat provided by the thermal fluid in primary cycle 21. The steam is finally superheated in a solar field 25 and then directed to steam turbine ST. In both solar fields 24 and 25, a fluid is heated without a phase change.

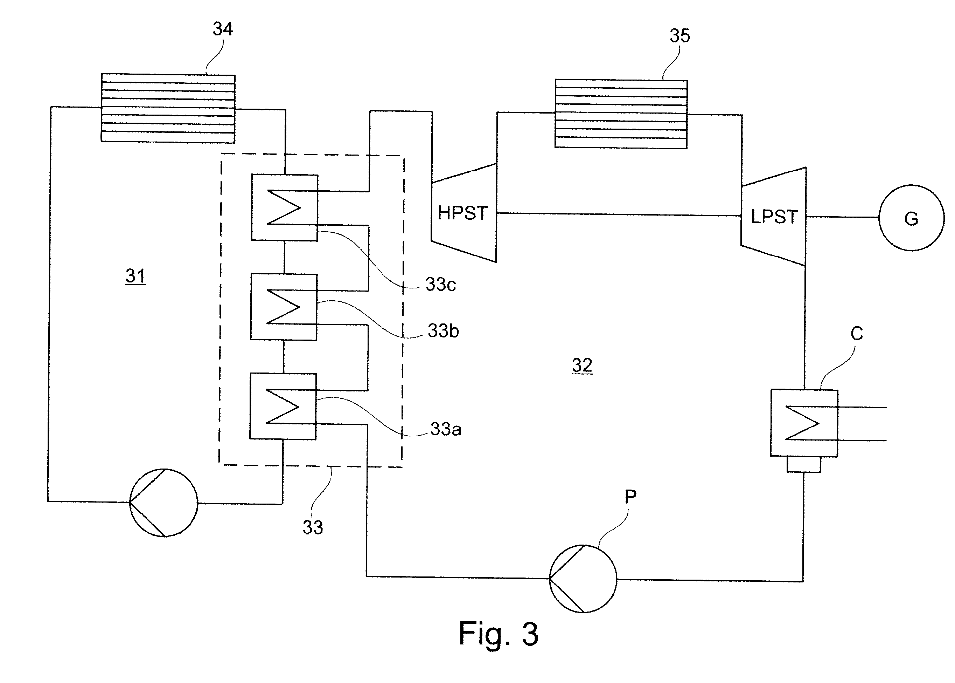

Figure 3 comprises a secondary water steam cycle 32 with heat exchange system 33 comprising heat exchangers 33a-c, which generate a high temperature steam for a high-pressure steam turbine HPST. The thermal fluid heated in the solar field 34 of the primary cycle 31 provides the heat for the steam generator 33. While the first heat exchanger 33a operates as preheater, the second heat exchanger 33b operates as evaporator, and the third heat exchanger 33c as superheater of the steam. The secondary cycle comprises a further solar field 35 configured and arranged for the reheating of the steam exhausted by the high-pressure steam turbine HPST before it is directed to a low-pressure steam turbine LPST for further expansion.

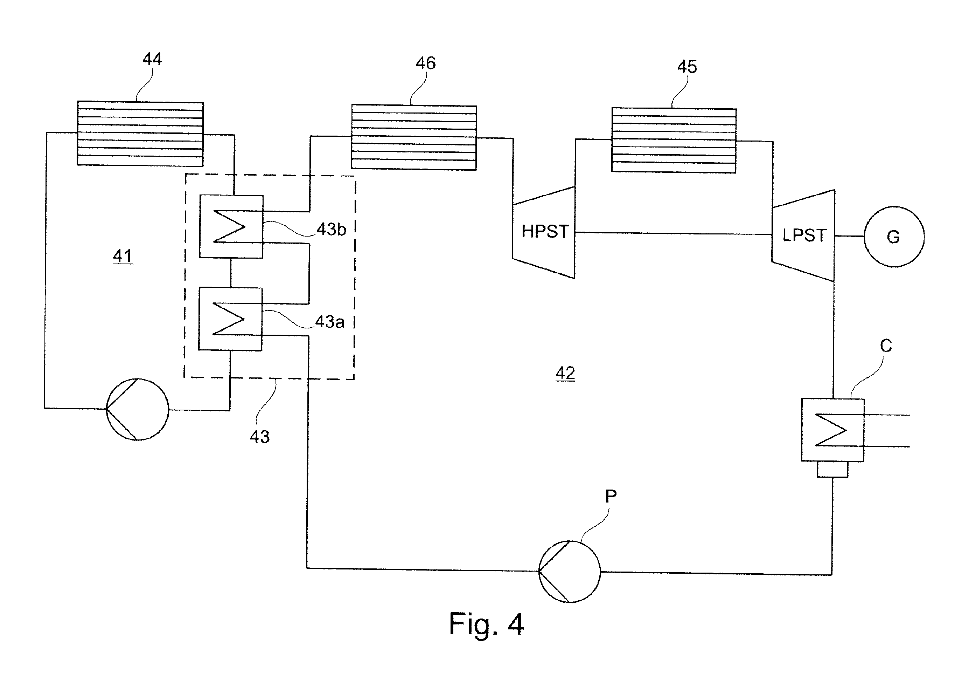

Figure 4 is an extension of the power plant of figure 3 in that it comprises in its secondary cycle 42, a first solar field 45 between the high-pressure steam turbine HPST and the low-pressure steam turbine LPST. In addition, it comprises a further solar field 46 arranged prior to the high-pressure steam turbine HPST to superheat steam for that turbine. The heat exchange system 43 comprises only two heat exchangers 43a and b operating as feedwater preheater and evaporator, respectively heated by the thermal fluid heated by the solar field 44 in the primary cycle 41. The solar field 46 in the secondary cycle is used for superheating the steam for the high-pressure steam turbine.

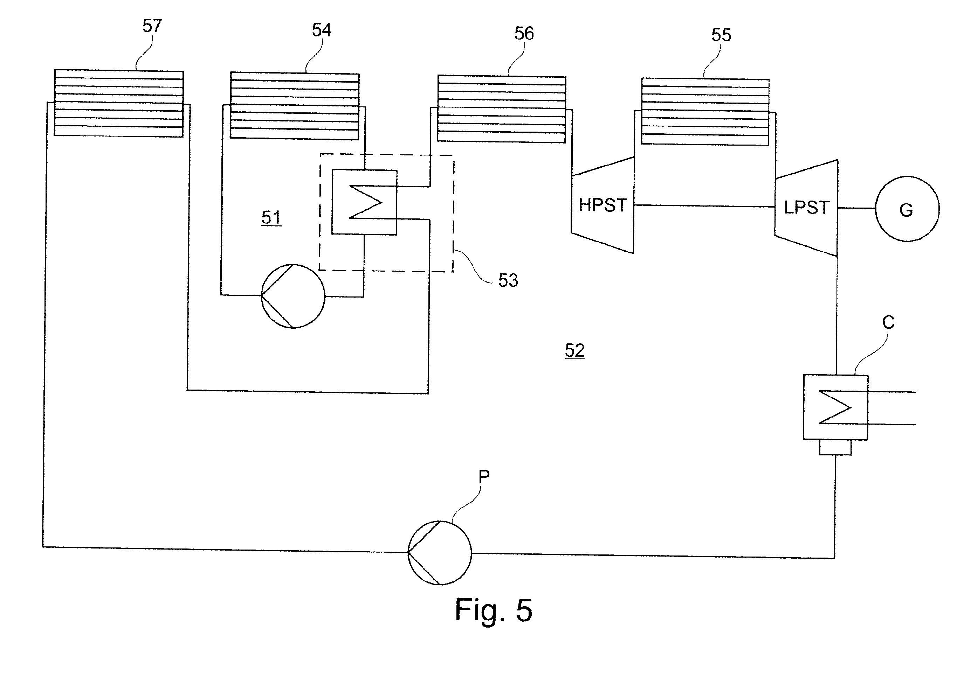

Figure 5 is a further extension of the plant of figure 4. Its secondary cycle 52 comprises high- and low-pressure steam turbines HPST and LPST . Solar fields 55 and 56 arranged prior to the low-pressure and high-pressure steam turbines, respectively. A heat exchanger system 53 connecting primary and secondary cycles, comprises one heat exchanger operating as evaporator, which generates steam by means of the thermal fluid heated by solar field 54 of the primary cycle 51. An additional solar field 57 is arranged in the secondary cycle for prehating the feedwater following the feedwater pump P. In this configuration, preheating, superheating as well as reheating of steam is performed by direct solar radiation of the water or steam, each without phase change. Heat exchange with phase change occurs only in the heat exchanger 53.

In all configurations, the steam temperatures that can be achieved by means of the direct solar heating in the secondary cycle can reach up to 500°C. Compared to a steam turbine power plant operated with steam of 375°C an efficiency increase of an estimated 10% or more can be achieved.
The proposed power plant may be operated in a sliding pressure mode or a fixed pressure operation. However, in order to maintain the thermal stress on the solar absorber tubes, a fixed pressure operation mode may be preferred.

### Terms used in Figures

- 1,11,21,31,41,51: primary cycle
- 2,12,22,32,42,52: secondary cycle
- 3,13,23,33,43,53: heat exchange system
- 3a-c,13a-b,23,33a-c,43a-b,53: heat exchangers
- 4,14,24,34,44,54: solar field in primary cycle
- 25,26,35,45,46,55,56,57: further solar fields in secondary cycle
- ST: steam turbine
- HPST: high-pressure steam turbine
- LPST: low-pressure steam turbine
- G: generator
- C: steam condenser
- P: feedwater pump

## Claims

1. A solar thermal power plant comprising at least one steam turbine (ST, HPST, LPST) for the generation of electrical energy by means of a generator (G), a primary cycle (11, 21, 31, 41, 51) providing heat, and a secondary cycle (12, 22, 32, 42, 52), which forms the water-steam cycle of the steam turbine, where the primary and secondary cycles are operatively connected by means of a heat exchange system (13, 23, 33, 43, 53) arranged to transfer heat of a thermal fluid circulating through the primary cycle (11, 21, 31, 41, 51) to a fluid of the secondary cycle (12, 22, 32, 42, 52), and where the primary thermal cycle (11,21,31,41,51) comprises a solar field (14, 24, 34, 44, 54) **characterized in that**
the solar thermal power plant comprises at least one additional solar field (15, 25, 26, 35, 45, 46, 55, 56, 57) arranged in the secondary cycle (12, 22, 32, 42, 52).

2. Solar thermal power plant according to claim 1
**characterized in that**
a solar field (15) is arranged in the secondary cycle (12) after the heat exchange system (13) and prior to the steam turbine (ST) in the direction of flow in the secondary cycle (12).

3. Solar thermal power plant according to claim 1
**characterized in that**
the secondary cycle (22) comprises a first solar field (25), arranged after the heat exchange system (23) and prior to the steam turbine (ST) and a second solar field (26) is arranged after a feed water pump (P) or a bleed steam heated preheating train of the secondary cycle (22) and prior to the heat exchange system (23) in the direction of flow in the secondary cycle (22).

4. Solar thermal power plant according to claim 1
**characterized in that**
a solar field (35) is arranged in the secondary cycle (32) after a first, high-pressure steam turbine (HPST) and prior to a second, low-pressure steam turbine (LPST).

5. Solar thermal power plant according to claim 1
**characterized in that**
two solar fields (45, 46) are arranged in the secondary cycle (42), where one solar field (45) is arranged after a first high-pressure steam turbine (HPST) and prior to a second low-pressure steam turbine (LPST) and one solar field (46) is arranged after the heat exchange system (43) and prior to the first high-pressure steam turbine (HPST) in the direction of flow in the secondary cycle (42).

6. Solar thermal power plant according to claim 1
**characterized in that**
the power plant comprises three solar fields (55, 56, 57) arranged in the secondary cycle (52), where one solar field (55) is arranged between a high-pressure steam turbine (HPST) and a low-pressure steam turbine (LPST), one solar field (56) is arranged after the heat exchange system (53) and prior to the high-pressure steam turbine (HPST), and one solar field (57) is arranged prior to the heat exchange system (53) and after a feed water pump (P) or a bleed steam heated preheating train in the direction of flow in the secondary cycle (52).

7. Solar thermal power plant according to any one of the foregoing claims 1-6
**characterized in that**
the heat exchange system (13, 23, 33, 43, 53) comprises at least one heat exchanger operating as evaporator.

8. Solar thermal power plant according to any one of the foregoing claims 1-6
**characterized in that**
the solar thermal power plant comprises a thermal heat storage device configured and arranged to deliver heat to or to receive heat from the fluid of the secondary cycle (12, 22, 32, 42, 52) via lines branching off the line of the secondary cycle.

9. Solar thermal power plant according to any one of the foregoing claims 1-6
**characterized in that**
the power plant comprises a thermal heat storage device configured and arranged to deliver heat to or to receive heat from the fluid of the thermal fluid heated by a solar field in the primary cycle (11, 21, 31, 41, 51) via a line branching off the thermal fluid line of the primary cycle (11,21,31,41,51).

10. Solar thermal power plant according to any one of the foregoing claims 1-8
**characterized by**
one or more injection lines arranged to direct liquid water from a source in the secondary cycle into the steam flow of the secondary cycle (12,22, 32, 42, 52).

11. Method of operating a solar thermal power plant with a primary cycle (11, 21, 31, 41, 51) and a secondary cycle (12, 22, 32, 42, 52) connected to the primary cycle by means of a heat exchange system (13, 23, 33, 43, 53), comprises heating a thermal fluid in the primary cycle by means of solar heat and transferring the heat in the heat exchange system (13,23,33,43,53) for steam generation and directing the resulting steam in the secondary cycle (12, 22, 32, 43, 52) to a steam turbine (ST)
**characterized by**
heating the steam generated by the heat exchange system (13, 23, 33, 43, 53) in the secondary cycle by means solar heat collected in a solar field arranged in the secondary cycle (12, 22, 32, 42, 52) and directing the steam to a steam turbine (ST).

12. Method according to claim 11
**characterized by**
superheating the steam of the secondary cycle (12, 22, 32, 42, 52) prior to a steam turbine (ST, HPST).

13. Method according to claim 11 or 12
**characterized by**
reheating the steam of the secondary cycle (12, 22, 32, 42, 52) prior to a low-pressure steam turbine (LPST).

14. Method according to any one of the claims 11-13
**characterized by**
preheating feedwater of the secondary cycle (12, 22, 32, 42, 52) prior to the heat exchange system (13, 23,33, 43, 53).

15. Method according to any one of the claims 11-14
**characterized by**
storing heat in a thermal heat storage unit in the secondary cycle (12, 22, 32, 42, 52), or the primary cycle (11, 21, 31, 41, 51) or both.
